# EUROPEAN PATENT SPECIFICATION

(11) **EP 2 053 855 B1**
(45) Date of publication and mention of the grant of the patent: **13.04.2016**
(21) Application number: 07790282.3
(22) Date of filing: 23.07.2007
(51) Int. Cl.: H04N 5/91, H04N 5/225, H04N 5/765, H04N 5/92, H04N 13/02

(54) **CAMERA, IMAGE DISPLAY DEVICE, AND IMAGE STORAGE DEVICE**
KAMERA, BILDANZEIGEANORDNUNG UND BILDSPEICHERANORDNUNG
CAMÉRA, DISPOSITIF D'AFFICHAGE D'IMAGE ET DISPOSITIF DE STOCKAGE D'IMAGE

(30) Priority: 08.08.2006 JP 2006215835
(43) Date of publication of application: 29.04.2009
(60) Divisional application: 16155943.0
(73) Proprietor: Nikon Corporation, Tokyo 108-6290 (JP)
(72) Inventor: MITSUHASHI, SetsuC/O NIKON CORPORATION,, , Chiyoda-ku, Tokyo;1008331 (JP); NOZAKI, HirotakeC/O NIKON CORPORATION,, Chiyoda-ku, Tokyo;1008331 (JP); OHMURA, AkiraC/O NIKON CORPORATION, Tokyo;1008331 (JP)
(74) Representative: Petzold, Silke
(86) International application number: PCT/JP2007/000788
(87) International publication number: WO 2008/018165

(56) References cited:
- EP-A2- 1 403 759
- WO-A1-03/053071
- JP-A- 2004 328 628
- JP-A- 2005 094 145
- JP-A- 2005 167 310
- JP-A- 2006 013 760
- US-A1- 2002 021 354
- US-A1- 2005 185 711

## Description

### TECHNICAL FIELD

The present invention relates to a camera, an image display device, and an image storage device which use 2D images and 3D images in a mixed manner.

### BACKGROUND ART

Conventionally, a camera shooting a 3D (three-dimension) image using two images with parallax and an image display device replaying a shot 3D image are known. In such a camera, an image display device, or an image storage device, when 3D images and 2D (two-dimension) images are used in a mixed manner, various devices are thought and a technology of separating 3D images and 2D images to different files and storing and replaying them is considered (see, for example, patent document 1).
Patent Document 1: Japanese Unexamined Patent Application Publication No. 2005-94145

### DISCLOSURE OF THE INVENTION

### PROBLEMS TO BE SOLVED BY THE INVENTION

In the related art, there is a problem that when 2D images and 3D images which are stored in a mixed manner are replayed, there are frequent changes in image and a viewer person thereby becomes tired. Furthermore, there is a problem that even when 3D images and 2D images are separated to different files, stored, and replayed, a user has to determine whether an output end device supports a 3D image and select an image suitable for the output end device.

In view of the above problems, a proposition of the present invention is to provide a camera, an image display device, and an image storage device which are able to, when 2D images and 3D images are used in a mixed manner, select 2D images or 3D images according to an output end device or allow an output end device to determine whether a image is a 2D image or a 3D image.

Patent Application US 2002/0021354 relates to an image sensing apparatus capable of separately performing image processing image data obtained from the left lens and right lens when a 3-D compatible lens is mounted correlate image data and reduce redundant data. When the 3-D compatible lens is mounted to the image sensing apparatus, the corresponding information is sent to the image sensing apparatus. In response, the image sensing apparatus main body performs image processing separately on the images obtained from the left and right lenses.

### MEANS FOR SOLVING THE PROBLEMS

Aspects of the present invention are set out in the appended claims.

### EFFECT OF THE INVENTION

According to the present invention, when 2D images and 3D images which are stored in a mixed manner are replayed, a control signal indicating whether an output image is a 2D image or a 3D image is output, so that a suitable image supported by an output end device can be displayed.

### BRIEF DESCRIPTION OF THE DRAWINGS

Fig. 1 (a) and (b) illustrate connection aspects among a camera, a storage device, and a television set according to each embodiment.
Fig. 2 illustrates a 3D image.
Fig. 3 is a block diagram showing a configuration of a camera 103 according to a first embodiment.
Fig. 4 is a block diagram showing a configuration of a storage device 101 according to the first embodiment.
Fig. 5 is a block diagram showing a configuration of a television set 104 according to the first embodiment.
Fig. 6(a) and (b) illustrate signal flow between a camera 103 or a storage device 101 and a television set 104.
Fig. 7(a) to (d) illustrate configuration examples of an image signal and a control signal.
Fig. 8 is a flow chart showing processing of a camera 103 or a storage device 101.
Fig. 9 is a flow chart showing processing of a camera 103 or a storage device 101.
Fig. 10 illustrates signal flow between a camera 103 or a storage device 101 and a television set 104 in a second embodiment.
Fig. 11 is a flow chart showing operation of a camera 103 or a storage device 101 according to the second embodiment.
Fig. 12 is a flow chart showing operation of a television set 104 according to a third embodiment.
Fig. 13 is a flow chart showing operation of a storage device 101 according to a fourth embodiment.
Fig. 14(a) and (b) illustrate states of display on the screen of a television set 104 according to a fifth embodiment.

### BEST MODE FOR CARRYING OUT THE INVENTION

A camera, an image display device, and an image storage device according to the present invention will be described below with reference to the drawings.

### (First Embodiment)

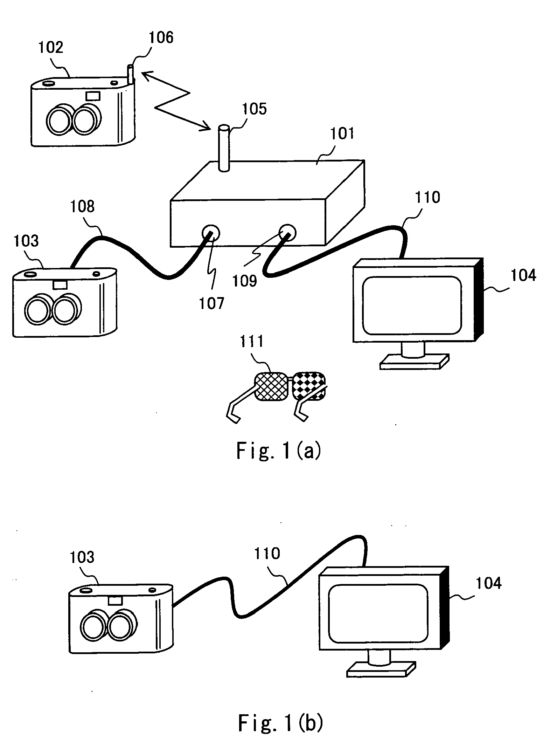

Figs. 1 (a) and 1 (b) show connection examples of cameras 102 and 103, an image display device (television set) 104, and an image storage device (storage device) 101 according to the first embodiment of the present invention. The storage device 101 captures and stores images shot by the camera 102 or the camera 103 and outputs them to the television set 104 by a slide show or the like.

In Fig. 1 (a), the camera 102 is a camera capable of wireless connection, which performs wireless communication between an antenna 105 of the storage device 101 and an antenna 106 of the camera 102 to output images shot by the camera 102 to the storage device 101.

The camera 103 is connected with a USB (Universal Serial Bus) interface 107 of the storage device 101 through a USB cable 108 and outputs images shot by the camera 103 to the storage device 101. Note that the camera 102 and the camera 103 are able to shoot not only a 2D image but also a 3D image.

The storage device 101 captures 2D images and 3D images from the camera 102 or the camera 103 and outputs 2D images and 3D images from an output terminal 109 to the television set 104 through a connection cable 110, and the television set 104 displays these images.

Alternatively, the camera 103 may be directly connected with not the storage device but the television set 104 through a connection cable 110 as shown in Fig. 1 (b) and output 2D images and 3D images shot by the camera 103 to the television set 104 for viewing. The configurations of the cameras 102 and 103, the storage device 101, and the television set 104 will be described in detail later.

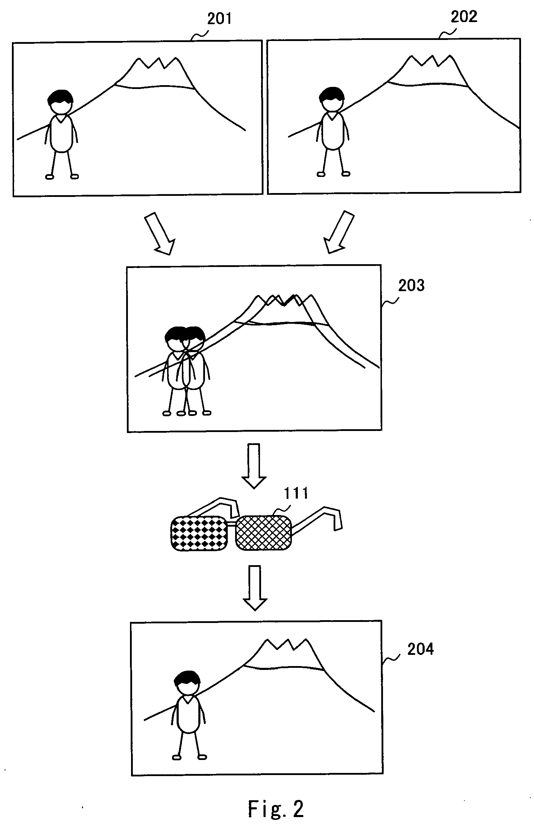

A 3D image used in this embodiment will be simply described using Fig. 2. A viewer can view a 3D image of this embodiment while wearing 3D eye glasses 111. In Fig. 2, it is assumed that two parallax images of an image for left eye 201 and an image for right eye 202 for a 3D image have been shot by the camera 102 or the camera 103. For example, an image 203 synthesized of a red image 201 and a blue image 202 is displayed on the television set 104. Since there is a parallax between the combined and displayed two images, the image 203 looks double. However, when the viewer views the image 203 displayed on the television set 104 while wearing 3D eye glasses 111, one 3D image 204 is viewed. To describe it simply, when a blue color filter is provided on the left glass of the 3D eye glasses 111 and a red color filter is provided on the right glass thereof, the image for right eye 202 is filtered by the blue color filter, thus being not seen by the left eye, while the image for left eye 201 is filtered by the red color filter, thus being not seen by the right eye, and therefore the image for left eye 201 is seen by the left eye and the image for right eye 202 is seen by the right eye, so that the images are recognized as a 3D image in the head. In this way, a pair of parallax images for left eye and right eye is necessary for a 3D image.

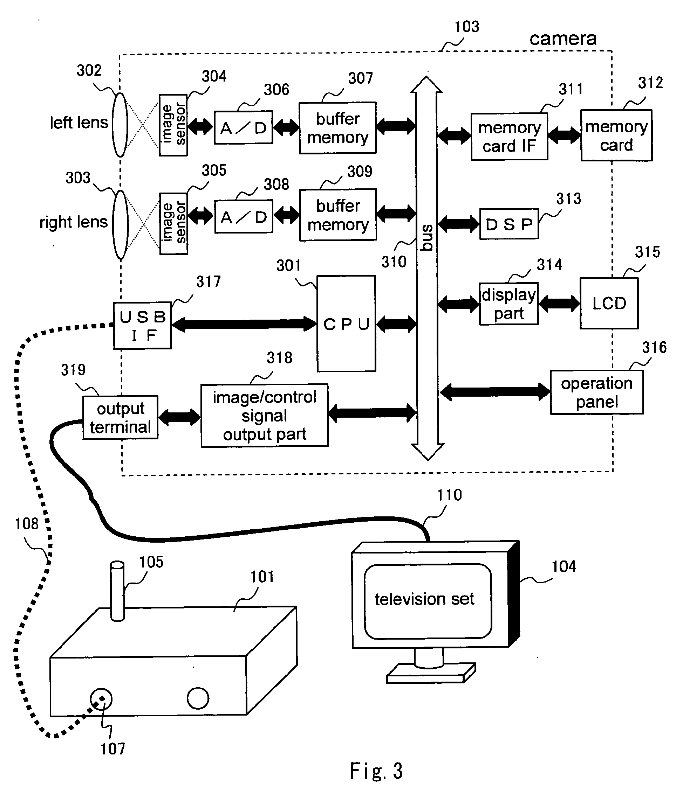

Next, the configuration of the camera 103 in Fig. 1 will be described using Fig. 3. In the block diagram of Fig. 3, the camera 103 is able to shoot a 3D image and has a left lens 302 and a right lens 303 so as to be able to shoot a pair of parallax images for left eye and right eye. Light from a subject incident through the left lens 302 is subjected to photoelectric conversion by image sensor 304, the photoelectric-converted electric signal is further converted into digital image data by an A/D converter 306 and the digital image data is taken into a buffer memory 307. Likewise, light from the subject incident through the right lens 303 is subjected to photoelectric conversion by image sensor 305, the photoelectric-converted electric signal is further converted into digital image data by an A/D converter 308 and the digital image data is taken into a buffer memory 309.

Image data taken into the buffer memories 307 and 309 can be read by a CPU 301 through a bus 310, image-processed by a DSP (digital signal processing part) 313, and stored in a memory card 312 through a memory card IF (interface) 311. Note that data of an image shot in 2D is stored with a flag indicative of a 2D image added thereto, and data of an image shot in 3D is stored with a flag indicative of a 3D image added thereto.

Furthermore, the camera 103 is controlled by software of the CPU 301, and a user gives various operating instructions to the CPU 301 through an operation panel 316. For example, operating instructions such as a shutter operation, selection between a 2D shoot and a 3D shoot, read and storage of an image from the memory card 312, and transmission of an image to the storage device 101 are given to the CPU 301.

A USB IF (USB interface) 317 is for transmitting digital image data from the camera 103 to the storage device 101, and transmits image data selected through the operational panel 316 by a user to the USB IF 107 of the storage device 101 through the USB cable 108.

In this connection, when the camera 102 in Fig. 1 is coupled to the storage device 101, image data is modulated to a high-frequency signal by a wireless transmitting part in the camera 102 instead of the USB IF 317 of the camera 103, and a radio wave is radiated from the antenna 106. The radiated radio wave is received by the antenna 105 of the storage device 101.

In this way, the camera 102 transmits image data to the storage device 101 by radio, and the camera 103 transmits image data to the storage device 101 through the USB cable 108.

Furthermore, the camera 103 is able to convert an image selected through the operation panel 316 by a user into an analog image signal with an image/control signal output part 318 and output the converted signal to the television set 104 connected with the camera through an output terminal 319 and the connection cable 110.

Here, the image/control signal output part 318 not only converts output image data into an analog image signal but also generates a control signal indicative of a 2D image when a flag added to the output image data is 2D while generating a control signal indicative of a 3D image when the flag is 3D, and outputs the control signal to the television set 104 through the output terminal 319 together with the image signal. The control signal is used as a 2D/3D selecting control signal for selection between 2D and 3D on the television set 104 side.

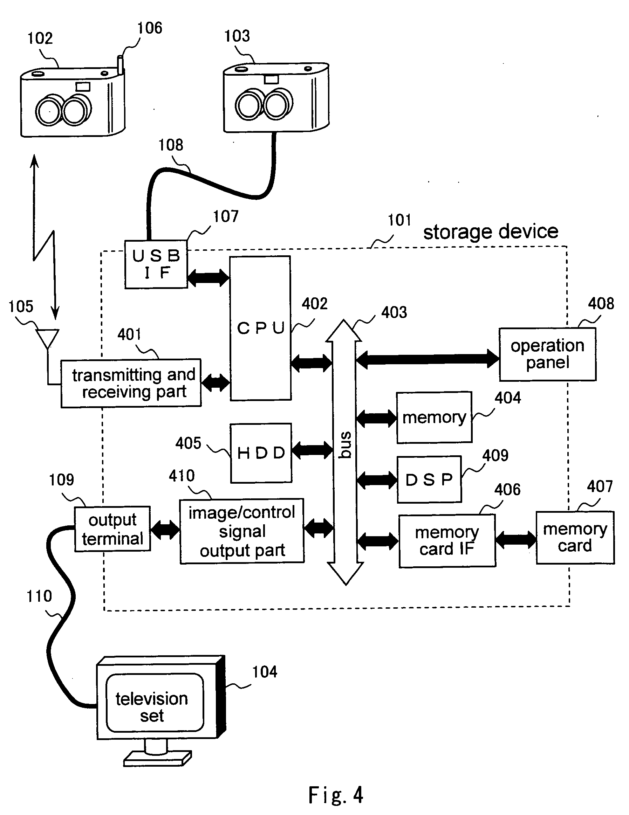

Next, the configuration of the storage device 101 will be described using Fig. 4. In the block diagram of Fig. 4, the storage device 101 operates according to a program previously stored in a CPU 402, and a user is able to take in images from each of the cameras, select taken-in images, and perform a slide show or the like through an operational panel 408.

2D images or 3D images shot by the camera 102 or the camera 103 are taken into the storage device 101 through the antenna 105 and a transmitting and receiving part 401 or the USB IF 107. Image data taken in is stored in a memory 404, a HDD 405, or a memory card 407 or the like connected with a memory card IF 406 through the CPU 402 and a bus 403.

A DSP 409 performs various kinds of image processing such as conversion from a 2D image to a 3D image, conversion from a 3D image to a 2D image, and insertion of characters, graphics, icons, etc. into an image according to commands of the CPU 402. Conversion from a 2D image to a 3D image is possible by forming pseudo parallax images by a calculation. In contrast, conversion from a 3D image to a 2D image is possible by using any one of a pair of parallax images. Various methods excluding these methods have been considered. However, detailed description about them is omitted because they are not the essence of the present invention.

An image/control signal output part 410 has the same function as that of the image/control signal output part 318 of the camera 103 described with Fig. 3, not only converts output image data into an analog image signal but also generates a control signal indicative of a 2D image when a flag added to the output image data is 2D while generating a control signal indicative a 3D image when the flag is 3D, and outputs the control signal to the television set 104 from an output terminal 109 through a connection cable 110 together with the image signal.

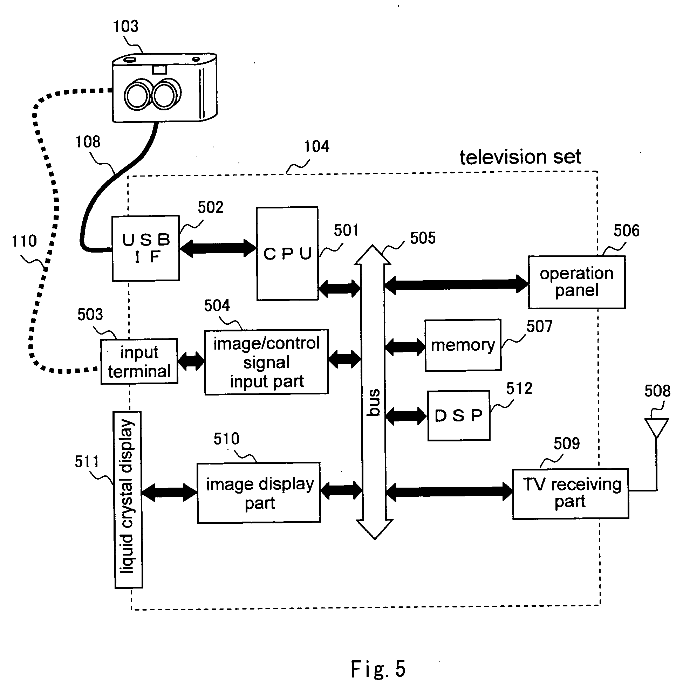

Next, the configuration of the television set 104 will be described using Fig. 5. In the block diagram of Fig. 5, the television set 104 operates according to a program previously stored in a CPU 501. A user is able to view a TV broadcast by operating an operation panel 506. A broadcasting radio wave received by a TV antenna 508 enters a TV receiving part 509, and a TV broadcast of a user-designated channel is received. A received image is temporarily stored in a memory 507 or is displayed directly on a liquid crystal display 511 through an image display part 510.

The television set 104 may take in 2D images and 3D images of the camera 103 and the storage device 101 into the memory 507 through a USB IF 502 or an input terminal 503 and an image/control signal input part 504, and display images taken in on a liquid crystal display 511 by a slide show or the like. When images are taken in through the USB IF 502, digital image data and digital control data are input, while when images are taken in through the input terminal 503, an analog image signal and an analog control signal are input and then converted into image data and control data by the image/control signal input part 504. Image data taken in is stored in the memory 507 together with control data. In addition, for images taken into the memory 507, various kinds of image processing are performed by a DSP 512 as necessary according to operations of the operation panel 506, and then the images are displayed on the liquid crystal display 511 through the image display part 510.

The DSP 512 has the same function as that of the DSP 409 in Fig. 4, and performs various kinds of image processing such as conversion from a 2D image to a 3D image, conversion from a 3D image to a 2D image, and insertion of characters, graphics, icons, etc. into an image according to commands of the CPU 501.

The image/control signal input part 504 has a function opposite to that of the image/control signal output part 318 of the camera 103 described with Fig. 3, not only converts an input image signal into image data but also generates, when an input control signal is indicative of a 2D image, a 2D flag and adds it to image data input at the same time, while generating, when an input control signal is indicative of a 3D image, a 3D flag and adding it to image data input at the same time, and stores image data in the memory 507.

Fig. 3 shows an aspect of digital connection by a USB between the camera 103 and the storage device 101 and analog connection by an analog image signal and an analog control signal between the camera 103 and the television set 104. Fig. 4 shows an aspect of analog connection by an image signal and a control signal between the storage device 101 and the television set 104. Further, Fig. 5 shows an aspect of digital connection by a USB and analog connection by analog signals between the camera 103 and the television set 104. Like this, analog connection or digital connection may be used among the camera 103, the storage device 101, and the television set 104.

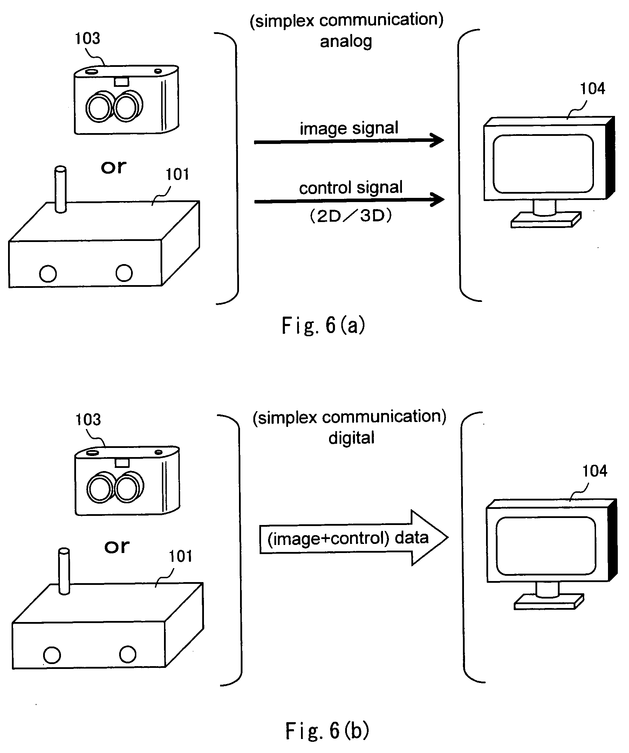

Next, signal flow when the camera 103 or the storage device 101 is coupled to the television set 104 will be described using Fig. 6. Fig. 6(a) shows the concept of simplex communication by which the camera 103 or the storage device 101 outputs an analog image signal and an analog control signal to the television set 104. There are a signal line for an image signal and a signal line for a control signal, and the control signal indicating whether an image signal being output is a 2D image or a 3D image is output in parallel with the image signal.

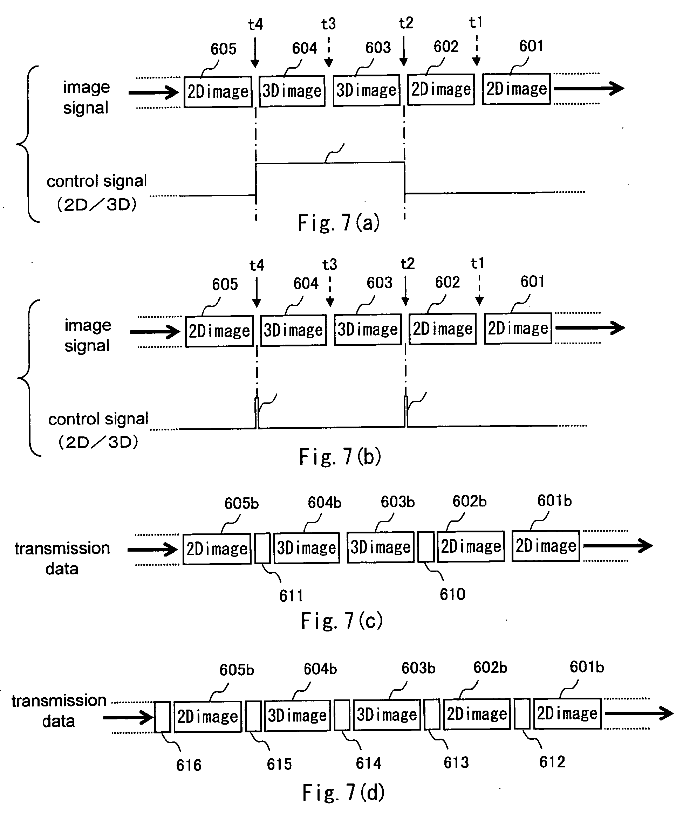

The state of each of the signals will be described using Figs. 7(a) and 7(b). Fig. 7(a) shows the flow of an analog image signal in the case that 2D image 601, 2D image 602, 3D image 603, 3D image 604, and 2D image 605 are sequentially displayed each for a predetermined time by a slide show, and the timing with a control signal indicating whether an image signal being output is a 2D image or a 3D image. An image existing more on the right side on the paper was output earlier, and a newer image is shown toward the left side. The control signal is output as a low level for a 2D image, and is output as a high level for a 3D image. Thus, from the start of output of 2D image 601 to time t2 when the output of 2D image 602 ends through time t1, the control signal is at the low level indicative of a 2D image. From time t2 when the output of the next 3D image 603 starts to time t4 when the output of 3D image 604 ends, the control signal is at the high level indicative of a 3D image. Likewise, from time t4 when the output of the next 2D image 605 starts, the control signal is at the low level indicative of a 2D image.

In this way, by only detecting whether the control signal is at a high level or a low level, it can be easily determined whether an image signal being output is a 2D image or a 3D image.

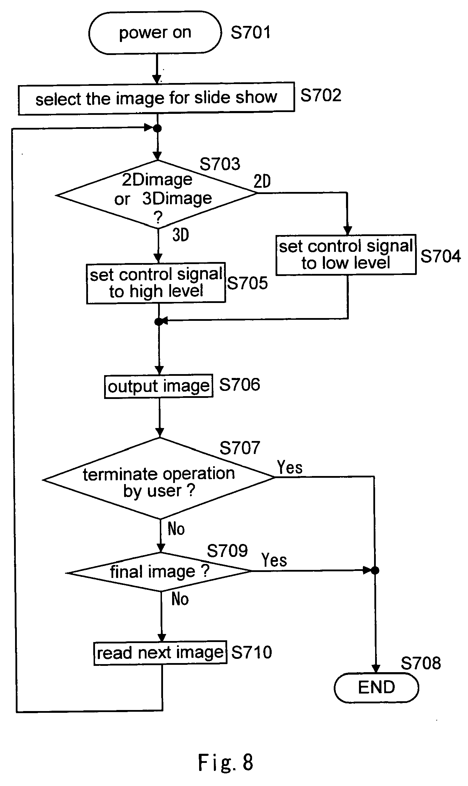

Next, the processing of the CPU 301 of the camera 103 in Fig. 3 in the case of Fig. 7(a) will be described using the flow chart of Fig. 8. First, the power supply of the camera 103 is turned on (step S701). Next, a plurality of images to be displayed by a slide show is selected from among 2D images and 3D images stored in the memory card 312 through the memory card IF 311 (step S702). Whether an image to be output first is a 2D image or a 3D image is determined according to information such as a flag which has been stored with image data when the image has been shot (step S703). When the image is a 2D image, the image/control signal output part 318 in Fig. 3 generates a low level control signal and outputs it to the television set 104 through the output terminal 319 and the connection cable 110 (step S704). When the image is a 3D image, the image/control signal output part 318 in Fig. 3 generates a high level control signal and outputs it to the television set 104 through the output terminal 319 and the connection cable 110 (step S705). At the same time when changing a control signal in step S704 or S705, the image/control signal output part 318 converts image data into an image signal and displays it on the television set 104 through the output terminal 319 and the connection cable 110 (step S706). When a user's terminate operation has been performed (step S707) or the final image of the slide show has been displayed (step S709), the slide show is terminated (step S708). When there is a next image for the slide show, the next image is read and the processing returns to step S703 (step S710).

In this way, the image/control signal output part 318 is able to generate a control signal as shown in Fig. 7(a) and output it to the television set 104. The processing of the CPU 301 of the camera 103 in Fig. 3 is described above, and the processing of the CPU 402 of the storage device 101 in Fig. 4 when the storage device 101 is coupled to the television set 104 is the same as that of the CPU 301 of the camera 103 described with Fig. 8.

In Fig. 7(a), the control signal is output in series while a 2D image or a 3D image is output, but may be output only at a time of change from a 2D image to a 3D image or a time of change from a 3D image to a 2D image. For example, as shown in Fig. 7(b), a pulsed control signal may be output at time t2 of change from 2D image 602 to 3D image 603 or at time t4 of change from 3D image 604 to 2D image 605.

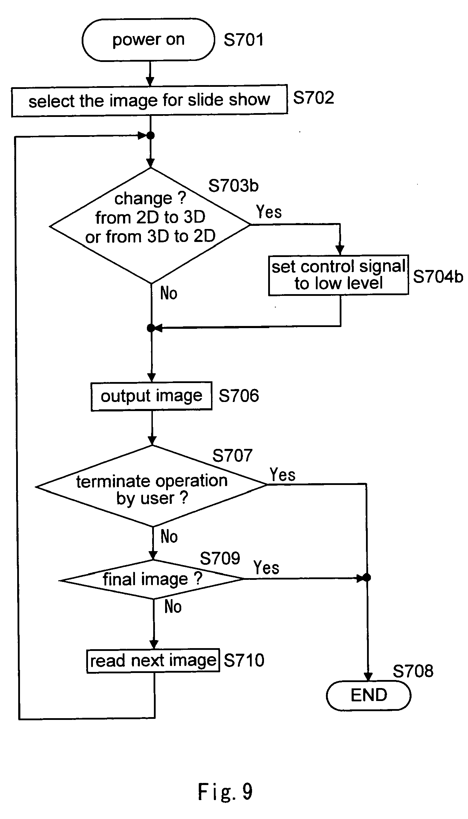

Next, the processing of the CPU 301 of the camera 103 in Fig. 3 in the case of Fig. 7(b) will be described using the flow chart of Fig. 9. The flow chart of Fig. 9 is different from that of Fig. 8 only in that step S703 is replaced with step S703b, step S704 is replaced with step S704b, and step 705 is deleted. Other processing is the same as that of Fig. 8, so that only different processing steps will be described.

In step S703b, it is determined whether there has been a change from a 2D image to a 3D image or a change from a 3D image to a 2D image. When there is either of the changes, the image/control signal output part 318 in Fig. 3 generates a pulsed control signal and outputs it to the television set 104 through the output terminal 319 and the connection cable 110 (step S704b). At the same time when outputting the pulsed control signal, the image/control signal output part 318 in Fig. 3 converts image data into an analog image signal and outputs it to the television set 104 through the output terminal 319 and the connection cable 110 (step S706). Processing after step S706 is the same as that of the flow chart of Fig. 8, so that description thereof is omitted. The processing of the CPU 301 of the camera 103 in Fig. 3 is described above, and the processing of the CPU 402 of the storage device 101 in Fig. 4 when the storage device 101 is coupled to the television set 104 is the same as that of the CPU 301 of the camera 103 described with Fig. 9.

In Fig. 7(b), pulsed control signals of the same polarity are used at a time of change from a 2D image to a 3D image and at a time of change from a 3D image to a 2D image. However, it is preferable that a positive polarity pulse is used at a time of change from a 2D image to a 3D image and a negative polarity pulse is used at a time of change from a 3D image to a 2D image because the direction of a change is recognized. Furthermore, in Fig. 6(a), it is shown that a control signal and an image signal are sent through different cables. However, a control signal and an image signal may be multiplexed and sent through one cable.

Next, it will be described using Fig. 6(b) that either the USB IF 31 7 of the camera 103 in Fig. 3 or the USB IF 107 of the storage device 101 in Fig. 4 is coupled to the USB IF 502 of the television set 104 in Fig. 5 and image data and control data are output digitally to the television set 104. Fig. 6(b) shows the concept of simplex communication outputting image data and control data indicating whether the image data is 2D image data or 3D image data through a digital signal line such as an USB interface. In the case of digital, not only the USB interface of this embodiment but also an interface according to IEEE 1394 standard or HDMI standard may be used.

An example of each signal in the case of Fig. 6(b) will be described using Figs. 7(c) and 7(d). Fig. 7(c) shows the output timing of image data when 2D image 601 b, 2D image 602b, 3D image 603b, 3D image 604b, and 2D image 605b are sequentially displayed each for a predetermined time by a slide show, and control data 610 and 611 indicating whether image data being output is 2D image data or 3D image data. An image existing more on the right side on the paper was output earlier, and a newer image is shown toward the left side.

Furthermore, each control data is inserted only at a time of change from a 2D image to a 3D image or at a time of change from a 3D image to a 2D image. For example, control data 610 indicative of a change from 2D to 3D is inserted between 2D image 602b and 3D image 603b, and control data 611 indicative of a change from 3D to 2D is inserted between 3D image 604b and 2D image 605b. On the other hand, Fig. 7(d) shows an example that control data indicative of a 2D image or a 3D image is added to every image data being output. For example, control data 612, 613, and 616 indicative of 2D are added to 2D images 601 b, 602b, and 605b, respectively.

Addition of control data described above is processed by the CPU 301 of the camera 103 or the CPU 402 of the storage device 101. The flow chart of this processing is basically the same as that of Fig. 8 or 9. For example, transmission data in Fig. 7(d) can be realized by replacing step S704 of Fig. 8 with addition of control data to a 2D image and replacing step S705 with addition of control data to a 3D image. Furthermore, transmission data in Fig. 7(c) can be realized by replacing step S704b of Fig. 9 with addition of control data at a time of change.

In this way, when 2D images and 3D images which are stored in a mixed manner are output, a control signal indicating whether an image being output is a 2D image or a 3D image is output, so that an output end device such as the television set 104 is able to easily determine whether an image being input is a 2D image or a 3D image according to the control signal being input without analyzing the image being input.

### (Second Embodiment)

Next, a camera, an image display device, and an image storage device according to the second embodiment of the present invention will be described. The configurations of the camera 103, the image display device (television set) 104, and the image storage device (storage device) 101 are the same as those of the first embodiment, and therefore description thereof is omitted.

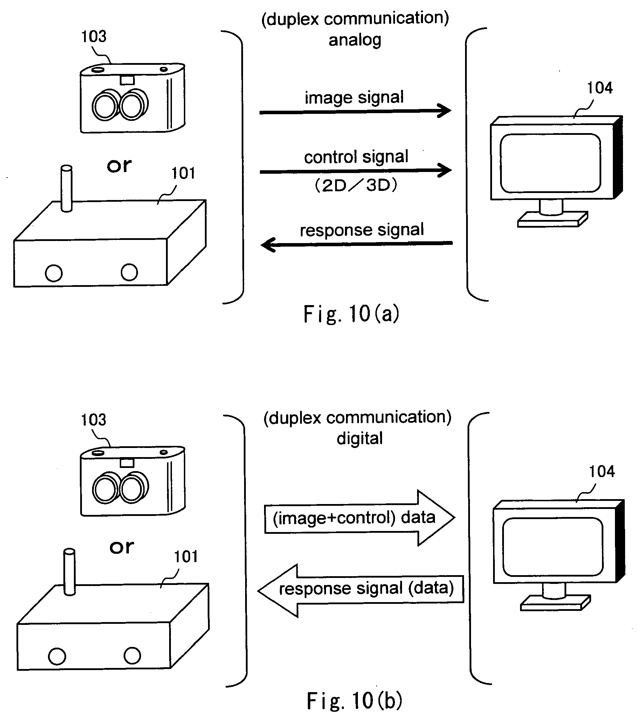

This embodiment is different from the first embodiment in signal flow when the camera 103 or the storage device 101 is coupled to the television set 104 as shown in Fig. 10. In Fig. 6 of the first embodiment, an image signal and a control signal are sent from the camera 103 or the storage device 101 to the television set 104 by simplex communication. In contrast to this, in the case of Fig. 10 of this embodiment, duplex communication is used by which a response signal is returned from the television set 104 to the camera 103 or the storage device 101. Fig. 10(a) shows a case that an image signal, a control signal, and a response signal are input and output in analog form, while Fig. 10(b) shows a case that image data, control data, and response data are input and output in digital form. In any of the cases, the same signal flow is used and an out end device returns a response signal or response data when recognizing a control signal or control data.

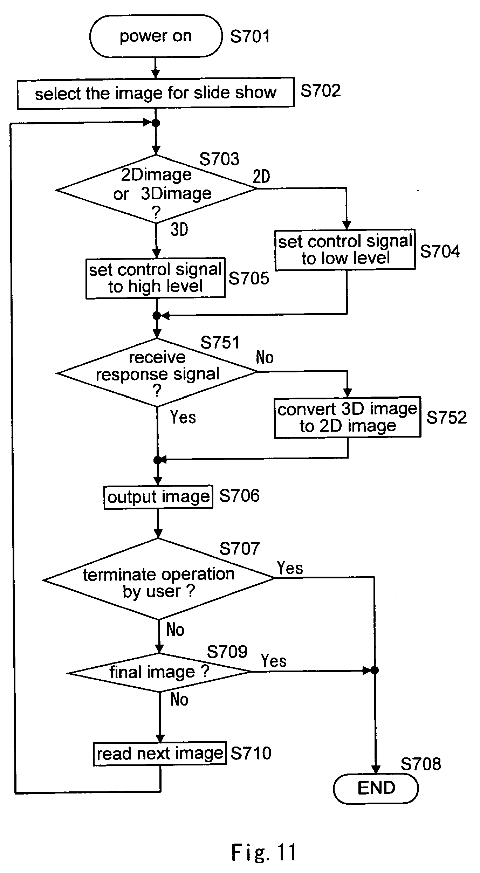

Next, the processing of the CPU 301 of the camera 103 shown in Fig. 3 in the case of Fig. 10(a) will be described using the flow chart of Fig. 11. Processing from step S701 to S705 is the same as that of Fig. 8 of the first embodiment. In this embodiment, when an image is output, it is determined whether a response signal to a control signal output to the television set 104 in step S704 or S705 has been received or not (step S751). When a response signal has been received, the same processing as that in Fig. 8 of the first embodiment will be performed. However, when a response signal has not been received, processing of converting a 3D image to be output into a 2D image (step S752) is performed, and then the 2D image after conversion is output to the television set 104 in step S706.

The response signal will be described below. The response signal is a signal which is returned to the camera 103 or the storage device 101 when the television set 104 to which a control signal indicative of a 2D image or a 3D image output from the camera 103 or the storage device 101 has been input has recognized the control signal. Thus, when a response signal has not been returned from an output end television set (a television set which is not sure to have the same configuration as that of the television set 104), the television set is very likely to have a configuration not equivalent to that of the television set 104 and be not capable of displaying a 3D image, so that the camera 103 or the storage device 101 converts a 3D image into a 2D image in step S752 and outputs an image signal of the 2D image to the television set.

In this way, for a usual television set which does not support 3D image display, the camera 103 or the storage device 101 converts a 3D image into a 2D image and outputs it, so that the 3D image can be viewed as the 2D image without any problem.

In the above description, when there is no response signal, that is, a television set does not support a 3D image, processing of converting a 3D image to be output into a 2D image (step S752) is performed in the flow chart of Fig. 11. In contrast, when there is a response signal, that is, a television set 104 supports a 3D image, processing of converting a 2D image to be output into a 3D image may be performed. In this case, just after branching to Yes in the judgment process of step S751, a processing step converting a 2D image into a 3D image may be inserted.

### (Third Embodiment)

An image display device (television set) according to the third embodiment of the present invention has the same configuration as that of the television set 104 shown in Fig. 5 of the first embodiment. This embodiment is different from the first embodiment in, for example, that a television set dedicated for 3D in which special process is applied to the screen of a liquid crystal display 511 is assumed. Furthermore, in this embodiment, in the block diagram of the television set 104 of Fig. 5, the DSP 512 operates so as to convert a 2D image into a 3D image according to a command of the CPU 501. A method of conversion to a 3D image is possible by, for example, making pseudo parallax images by a calculation as described for the DSP 409 of the first embodiment.

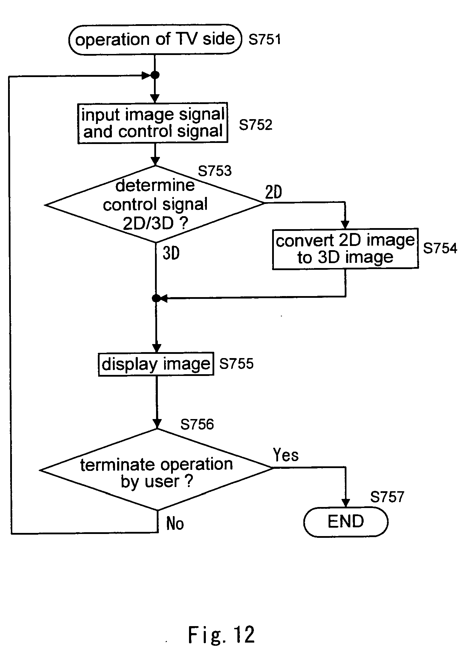

Next, the processing of the CPU 501 of the television set 104 of this embodiment will be described using the flow chart of Fig. 12. In step S751, the processing of the television set 104 is started, and an image signal and a control signal are input from the camera 103 or the storage device 101 (step S752). It is determined whether the input control signal is indicative of a 2D image or a 3D image (step S753). When the control signal is indicative of a 3D image, the input image signal is directly displayed as a 3D image on the liquid crystal display 511 through the image display part 510 (step S755). When the control signal is indicative of a 2D image, the input image signal is converted into a 3D image by the DSP 512 (step S754). The 3D image obtained by the conversion is displayed as a 3D image on the liquid crystal display 511 (step S755). After that, when a user has performed a terminate operation through the operation panel 506 (step S756), the processing is terminated (step S757), while when a terminate operation has not been performed, the processing returns to step S752 and the same processing is then repeated.

In this way, the television set 104 is able to determine whether an image being input is a 2D image or a 3D image according to a control signal output by the camera 103 or the storage device 101. In particular, when the television set 104 is dedicated for 3D display, the television set 104 converts an input 2D image into a 3D image and displays the 3D image, so that it is avoided that a 2D image is forcibly displayed and becomes hard to view. As described with Fig. 6 of the first embodiment, an analog image signal and an analog control signal may be digital image data and digital control data, respectively.

### (Fourth Embodiment)

An image storage device (storage device) according to the fourth embodiment of the present invention has the same configuration as that of the storage device 101 shown in Fig. 4 of the first embodiment, and uses a response signal or response data described in the second embodiment. The storage device 101 of this embodiment determines, when taking in an image from the camera 102 or the camera 103, whether the image to be taken in is a 2D image or a 3D image according to control data output by the camera 102 or the camera 103, and adds a flag indicative of a 2D image or a 3D image to the image data taken in to store it in the HDD 405.

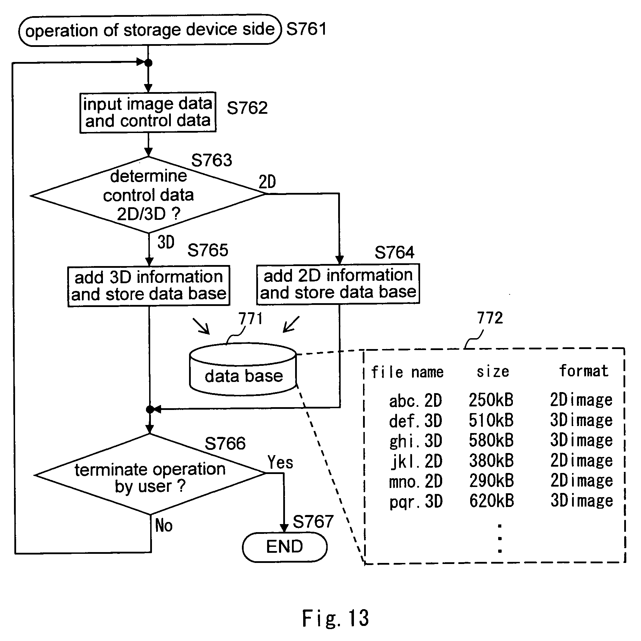

Next, the processing of the CPU 402 of the storage device 101 will be described using the flow chart of Fig. 13. In step S761, the processing of the storage device 101 is started, and digital image data and digital control data as shown in, for example, Fig. 7(d) are input from the camera 103 through the USB cable 108 and the USB IF 107 (step S762). It is determined whether input control data is indicative of a 2D image or a 3D image (step S763). When the control data is indicative of a 2D image, information such as a flag indicative of 2D is added to the input image data, which is then stored in the data base 771 in the HDD 405 (step S764). In contrast, when the control data is indicative of a 3D image, information such as a flag indicative of 3D is added to the input image data, which is then stored in the data base 771 in the HDD 405 (step S765). After that, when a user has performed a terminate operation for the storage operation through the operation panel 408 (step S766), the processing is terminated (step S767), while when a terminate operation has not been performed, the processing returns to step S762 and the same processing is then repeated.

Here, in the data base 771, for example, the file names, sizes, and types of images are stored as indicated by a dotted line 772. When the control signal is indicative of a 2D image, a file name with an extension of "2D" and a type with information of "2D image" are stored. Likewise, when the control signal is indicative of a 3D image, a file name with an extension of "3D" and a type with information of "3D image" are stored. The storage sample of the data base 771 surrounded by the dotted line 772 is an example, and information such as flags distinguishing between a 2D image and a 3D image may be stored by any other method.

Like this, the camera 103 outputs control data indicating whether image data output through the USB IF 317 is 2D image data or 3D image data to the storage device 101 with the output image data, so that the output end storage device 101 is able to determine whether the image data is 2D image data or 3D image data according to the input control data. In particular, the storage device 101 adds information such as a flag distinguishing between a 2D image or a 3D image to input image data and stores the image data in the data base 771, so that the storage device 101 is able to easily determine, when reading an image from the data base 771 later, whether the read image is a 2D image or a 3D image.

The digital image data and the digital control data may be an analog image signal and an analog control signal, respectively. However, in this case, blocks similar to the input terminal 503 and the image/control signal input part 504 provided in the block diagram of the television set 104 of Fig. 5 need to be provided in the block diagram of the storage device 101 of Fig. 4.

### (Fifth Embodiment)

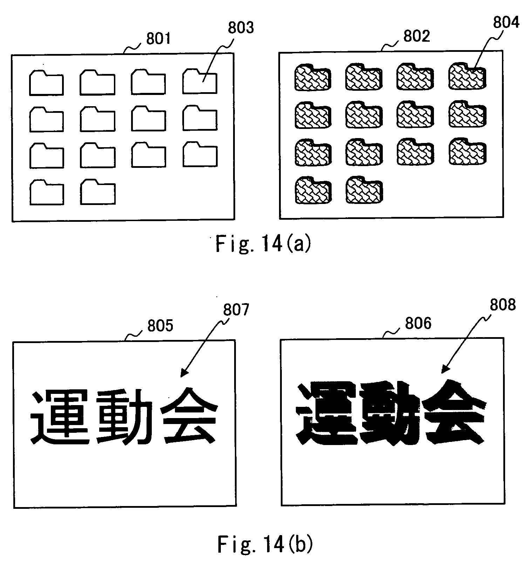

Next, a camera 103 or a storage device 101 according to the fifth embodiment of the present invention will be described. This embodiment uses a response signal described in the second embodiment. For example, in the second embodiment, when a response signal has not been returned for a control signal output to the television set 104 by the camera 103 or the storage device 101, the camera 103 or the storage device 101 converts a 3D image into a 2D image and outputs the 2D image. However, in this embodiment, display information other than images, for example, folder icons as shown in Fig. 14(a), characters as shown in Fig. 14(b), etc., are also displayed in 2D image form or 3D image form in accordance with images to be displayed.

For example, when a response has not been returned for a control signal output to the television set 104 by the camera 103 or the storage device 101, if folder icons as shown in Fig. 14(a) are displayed, 2D folder icons 803 as drawn on a screen 801 are displayed. In contrast, when a response signal has been returned, 3D folder icons 804 as drawn on a screen 802 are displayed. Furthermore, when a response signal has not been returned, if characters as shown in Fig. 14(b) are displayed, 2D characters 807 as drawn on a screen 805 are displayed. In contrast, when a response signal has been returned, 3D characters 808 as drawn on a screen 806 are displayed.

Like this, the camera 103 or the storage device 101 according to this embodiment determines whether there is a response signal for a control signal output to a television set and outputs also display information other than an image as a 3D pattern when the television set is capable of 3D display, so that display information with reality like a 3D image can be viewed.

In this embodiment, image data and control data may be an analog image signal and a control signal, respectively.

### (Sixth Embodiment)

Next, a camera 103 according to the sixth embodiment of the present invention will be described. This embodiment uses a response signal described in the second embodiment. This embodiment is equivalent to the second embodiment in that when a response signal has not been returned for a control signal output to a television set 104 by the camera 103, a 3D image is converted into a 2D image which is then output, while when a response signal has been returned, a 2D image is converted into a 3D image which is then output. In addition to this, in this embodiment, when a television set to which an image is output supports a 3D image, an image and display information to be displayed on the liquid crystal monitor 315 of the camera 103 in Fig. 3 are displayed in 3D form, while when the television set does not support a 3D image, an image and display information to be displayed on the liquid crystal monitor 315 of the camera 103 in Fig. 3 are displayed in 2D form.

In other words, display on the liquid crystal monitor 315 of the camera 103 is decided according to whether an image output end device such as the television set 104 supports 3D display or not. As a result, it is not necessary to convert a 2D image into a 3D image or convert a 3D image into a 2D image only for display on the liquid crystal monitor 315 of the camera 103 even though the television set 104 does not support 3D display, so that the processing of the camera 103 can be reduced

In this embodiment, an analog image signal and an analog control signal may be digital image data and digital control data, respectively.

The present invention is described in detail above. However, the above embodiments and their variations are only examples of the invention, and the present invention is not limited thereto. It is obvious that various modifications can be made without departing from the scope of the present invention.

## Claims

1. A camera (102 or 103), comprising:
a shooting part (302, 303, 304, 305) shooting an image in either one of 2D and 3D, **characterized in that** the camera (102 or 103) further comprises:
a control information part (301) generating control information indicating whether the image shot by the shooting part (302, 303, 304, 305) is in any one of 2D and 3D;
a first storage part (312) storing the image by associating the image with the control information; and
when the image stored in the first storage part (312) is output to an external image display device, connected with the camera, an output controlling part (318) generating a control signal used for control performed by the external image display device from the control information associated with the image and outputting the control signal to the external image display device.

2. The camera (102 or 103) according to claim 1, wherein
the output controlling part (318) outputs the control signal at a time of change one of from 3D to 2D and from 2D to 3D while outputting a plurality of the images in series.

3. The camera (102 or 103) according to claim 1, wherein
the output controlling part (318) outputs the control signal indicative of 3D during output of the image of 3D and outputs the control signal indicative of 2D during output of the image of 2D while outputting a plurality of the images in series.

4. The camera (102 or 103) according to any one of claims 1 to 3, further comprising:
a receiving part (S751) receiving a response signal from the external image display device for the control signal output by the output controlling part (318); and
a 3D/2D converting part (S752) converting a 3D image into a 2D image, wherein
the output controlling part (318) outputs the 3D image when the response signal from the external image display device received by the receiving part (S751) has been returned and outputs the 2D image when the response signal from the external image display device received by the receiving part (S751) has not been returned.

5. The camera (102 or 103) according to claim 4, wherein:
two types of display information which is 3D pattern and 2D pattern, to be output in addition to the image by the output controlling part (318) are provided; and
the output controlling part (318) outputs the 3D pattern display information when a response signal received by the receiving part (S751) is indicative of 3D display available.

6. An image display device (104) having a displaying part (510, 511) which is for coupling to the camera (102 or 103) according to any one of claims 1 to 5 and displays an image, the image display device (104) further comprising:
a 2D/3D detecting part (S753) detecting the control signal output by the camera (102 or 103);
a 2D/3D mutual converting part (S754) converting a 2D image into a 3D image and vice versa and converting an image into one of a 2D image and a 3D image according to a result of detection of the 2D/3D detecting part (S753); and
a displaying part (510, 511) displaying an image converted by the 2D/3D mutual converting part (S754).

7. An image storage device having a second storage part (101) which is for coupling to the camera (102 or 103) according to any one of claims 1 to 5 and stores an image input from the camera (102 or 103), the image storage device further comprising
a 2D/3D detecting part (S763) which detects the control signal output by the camera (102 or 103) and converts it into the control information, wherein
the second storage part (101) stores the control information detected by the 2D/3D detecting part (S763) together with the image.

8. The image storage device (101) according to claim 7, further comprising
an output controlling part (318) outputting the control information as a control signal when outputting the image stored in the second storage part (101).

9. The camera (102 or 103) according to claim 1, wherein
the output controlling part (318) generates and outputs a control signal indicating timing of switching between a 2D image and a 3D image based on the control information associated with each of a plurality of the images output to the image display device.

## Patentansprüche

1. Kamera (102 oder 103) umfassend:
einen Aufnahmeteil (302, 303, 304, 305), der ein Bild entweder in 2D oder 3D aufnimmt, **dadurch gekennzeichnet, dass** die Kamera (102 oder 103) ferner umfasst:
einen Steuerungsinformationsteil (301), der Steuerungsinformationen erzeugt, die darauf hinweisen, ob das Bild, das von dem Aufnahmeteil (302, 303, 304, 305) aufgenommen wurde, in 2D oder 3D ist;
einen ersten Speicherteil (312), der das Bild durch Zuordnen des Bildes zu den Steuerungsinformationen speichert; und
wenn das im ersten Speicherteil (312) gespeicherte Bild auf eine externe Bildanzeigevorrichtung ausgegeben wird, die mit der Kamera verbunden ist, einen Ausgabesteuerungsteil (318), der ein Steuerungssignal erzeugt, das zur Steuerung verwendet wird, die von der externen Bildanzeigevorrichtung anhand den Steuerungsinformationen, die dem Bild zugeordnet sind, ausgeführt wird und das Steuerungssignal auf die externe Bildanzeigevorrichtung ausgibt.

2. Kamera (102 oder 103) nach Anspruch 1, wobei
der Ausgabesteuerungsteil (318) das Steuerungssignal zu einem Zeitpunkt ausgibt, zu dem ein Wechsel von 3D auf 2D oder von 2D auf 3D erfolgt, während mehrere Bilder in Reihe ausgegeben werden.

3. Kamera (102 oder 103) nach Anspruch 1, wobei
der Ausgabesteuerungsteil (318) das Steuerungssignal, das auf 3D hinweist, während der Ausgabe des 3D-Bildes ausgibt und das Steuerungssignal, das auf 2D hinweist, während der Ausgabe des 2D-Bildes ausgibt, während mehrere der Bilder in Reihe ausgegeben werden.

4. Kamera (102 oder 103) nach einem der Ansprüche 1 bis 3, ferner umfassend:
einen Empfangsteil (S751), der ein Antwortsignal von der externen Bildanzeigevorrichtung für das Steuerungssignal empfängt, das durch den Ausgabesteuerungsteil (318) ausgegeben wird; und
einen 3D/2D-Umwandlungsteil (S752), der ein 3D-Bild in ein 2D-Bild umwandelt, wobei
der Ausgabesteuerungsteil (318) das 3D-Bild ausgibt, wenn das Antwortsignal von der externen Bildanzeigevorrichtung, das durch den Empfangsteil (S751) empfangen wurde, zurückgegeben wurde, und das 2D-Bild ausgibt, wenn das Antwortsignal von der externen Bildanzeigevorrichtung, das durch den Empfangsteil (S751) empfangen wurde, nicht zurückgegeben wurde.

5. Kamera (102 oder 103) nach Anspruch 4, wobei
zwei Arten von Anzeigeinformationen, bei denen es sich um ein 3D-Muster und ein 2D-Muster handelt, die zusätzlich zum Bild durch den Ausgabesteuerungsteil (318) ausgegeben werden sollen, zur Verfügung gestellt werden; und
der Ausgabesteuerungsteil (318) die 3D-Musteranzeigeinformationen ausgibt, wenn ein Antwortsignal, das durch den Empfangsteil (S751) empfangen wird, auf eine verfügbare 3D-Anzeige hinweist.

6. Bildanzeigevorrichtung (104), die einen Anzeigeteil (510, 511) aufweist, der für das Verbinden mit der Kamera (102 oder 103) gemäß einem der Ansprüche 1 bis 5 vorgesehen ist, und ein Bild anzeigt, wobei die Bildanzeigevorrichtung (104) ferner umfasst:
einen 2D/3D-Erkennungsteil (S753), der das Steuerungssignal erkennt, das von der Kamera (102 oder 103) ausgegeben wird;
einen gegenseitigen 2D/3D-Umwandlungsteil (S754), der ein 2D-Bild in ein 3D-Bild und umgekehrt umwandelt, und ein Bild gemäß einem Erkennungsergebnis des 2D/3D-Erkennungsteils (S753) in eines von einem 2D-Bild oder einem 3D-Bild umwandelt; und
einen Anzeigeteil (510, 511), der ein Bild anzeigt, das durch den gegenseitigen 2D/3D-Umwandlungsteil (S754) umgewandelt wurde.

7. Bildspeichervorrichtung, die einen zweiten Speicherteil (101) aufweist, der für das Verbinden mit der Kamera (102 oder 103) gemäß einem der Ansprüche 1 bis 5 vorgesehen ist, und ein Bild speichert, das von der Kamera (102 oder 103) eingegeben wurde, wobei die Bildspeichervorrichtung ferner umfasst:
einen 2D/3D-Erkennungsteil (S763), der die Steuerungssignalausgabe durch die Kamera (102 oder 103) erkennt und sie in die Steuerungsinformationen umwandelt, wobei
der zweite Speicherteil (101) die Steuerungsinformationen, die durch den 2D/3D-Erkennungsteil (S763) erkannt wurden, gemeinsam mit dem Bild speichert.

8. Bildspeichervorrichtung (101) nach Anspruch 7, ferner umfassend:
einen Ausgabesteuerungsteil (318), der die Steuerungsinformationen als ein Steuerungssignal ausgibt, wenn das Bild, das im zweiten Speicherteil (101) gespeichert ist, ausgegeben wird.

9. Kamera (102 oder 103) nach Anspruch 1, wobei
der Ausgabesteuerungsteil (318) ein Steuerungssignal erzeugt und ausgibt, das auf die Terminierung des Wechsels zwischen einem 2D-Bild und einem 3D-Bild basierend auf den Steuerungsinformationen hinweist, die jedem der mehreren Bildern zugeordnet sind, die auf die Bildanzeigevorrichtung ausgegeben werden.

## Revendications

1. Caméra (102 ou 103), comprenant :
- une partie de prise de vue (302, 303, 304, 305) destinée à prendre une image dans une dimension quelconque parmi 2D et 3D, **caractérisée en ce que** la caméra (102 ou 103) comprend en outre :
- une partie d'informations de commande (301) générant des informations de commande indiquant si l'image prise par la partie de prise de vue (302, 303, 304, 305) est dans l'une quelconque parmi les dimensions 2D et 3D ;
- une première partie de stockage (312) stockant l'image en associant l'image aux informations de commande ; et
- lorsque l'image stockée dans la première partie de stockage (312) est générée en sortie vers un dispositif d'affichage d'image externe, lequel est connecté à la caméra, une partie de commande de sortie (318) génère un signal de commande utilisé pour une commande mise en oeuvre par le dispositif d'affichage d'image externe à partir des informations de commande associées à l'image, et génère en sortie le signal de commande vers le dispositif d'affichage d'image externe.

2. Caméra (102 ou 103) selon la revendication 1, dans laquelle :
la partie de commande de sortie (318) génère en sortie le signal de commande à un instant de commutation parmi une commutation de 3D à 2D et une commutation de 2D à 3D, tout en générant en sortie une pluralité des images en série.

3. Caméra (102 ou 103) selon la revendication 1, dans laquelle :
la partie de commande de sortie (318) génère en sortie le signal de commande indicatif de la dimension 3D au cours de la génération en sortie de l'image 3D, et génère en sortie le signal de commande indicatif de la dimension 2D au cours de la génération en sortie de l'image 2D, tout en générant en sortie une pluralité des images en série.

4. Caméra (102 ou 103) selon l'une quelconque des revendications 1 à 3, comprenant en outre :
- une partie de réception (S751) recevant un signal de réponse en provenance du dispositif d'affichage d'image externe pour le signal de commande généré en sortie par la partie de commande de sortie (318) ; et
- une partie de conversion 3D/2D (S752) convertissant une image 3D en une image 2D, dans laquelle :
la partie de commande de sortie (318) génère en sortie l'image 3D lorsque le signal de réponse, en provenance du dispositif d'affichage d'image externe, reçu par la partie de réception (S751), a été retourné, et génère en sortie l'image 2D lorsque le signal de réponse, en provenance du dispositif d'affichage d'image externe, reçu par la partie de réception (S751), n'a pas été retourné.

5. Caméra (102 ou 103) selon la revendication 4, dans laquelle :
- deux types d'informations d'affichage, correspondant à un motif 3D et un motif 2D, devant être générés en sortie en plus de l'image par la partie de commande de sortie (318), sont fournis ; et
- la partie de commande de sortie (318) génère en sortie les informations d'affichage du motif 3D lorsqu'un signal de réponse reçu par la partie de réception (S751) est indicatif d'un affichage 3D disponible.

6. Dispositif d'affichage d'image (104) présentant une partie d'affichage (510, 511) qui est destinée à être couplée à la caméra (102 ou 103) selon l'une quelconque des revendications 1 à 5, et qui affiche une image, le dispositif d'affichage d'image (104) comprenant en outre :
- une partie de détection 2D/3D (S753) détectant le signal de commande généré en sortie par la caméra (102 ou 103) ;
- une partie de conversion mutuelle 2D/3D (S754) convertissant une image 2D en une image 3D, et inversement, et convertissant une image en l'une parmi une image 2D et une image 3D selon un résultat de détection de la partie de détection 2D/3D (S753) ; et
- une partie d'affichage (510, 511) affichant une image convertie par la partie de conversion mutuelle 2D/3D (S754).

7. Dispositif de stockage d'image présentant une seconde partie de stockage (101) qui est destinée à être couplée à la caméra (102 ou 103) selon l'une quelconque des revendications 1 à 5, et qui stocke une image entrée à partir de la caméra (102 ou 103), le dispositif de stockage d'image comprenant en outre :
une partie de détection 2D/3D (S763) qui détecte le signal de commande généré en sortie par la caméra (102 ou 103), et qui le convertit en les informations de commande, dans lequel :
la seconde partie de stockage (101) stocke les informations de commande détectées par la partie de détection 2D/3D (S763), conjointement avec l'image.

8. Dispositif de stockage d'image (101) selon la revendication 7, comprenant en outre :
une partie de commande de sortie (318) générant en sortie les informations de commande sous la forme d'un signal de commande lors de la génération en sortie de l'image stockée dans la seconde partie de stockage (101).

9. Caméra (102 ou 103) selon la revendication 1, dans laquelle :
la partie de commande de sortie (318) génère et délivre en sortie un signal de commande indiquant la temporisation de commutation entre une image 2D et une image 3D, sur la base des informations de commande associées à chacune d'une pluralité des images générées en sortie vers le dispositif d'affichage d'image.
